# EUROPEAN PATENT APPLICATION

(11) **EP 1 492 319 A1**
(43) Date of publication of application: **29.12.2004**
(21) Application number: 04253535.1
(22) Date of filing: 14.06.2004
(51) Int. Cl.: H04M 7/00

(54) **A method and apparatus for processing calls in a core packet network using a half-call model**

(30) Priority: 27.06.2003 US 609117
(71) Applicant: LUCENT TECHNOLOGIES INC., Murray Hill, New Jersey 07974-0636 (US)
(72) Inventor: Tao, Xin, Naperville, IL 60565 (US)
(74) Representative: Watts, Christopher Malcolm Kelway, Dr.

(57) **Abstract**

A method and apparatus for processing calls in a core packet network using a half-call model are provided. The invention is directed to the processing of calls within the core packet network of a mobile switching center (MSC) by dividing the call into two half-calls -- an originating half-call and a terminating half-call. This technique allows for flexibility in implementation.

## Description

### BACKGROUND OF THE INVENTION

This invention relates to a method and apparatus for processing calls in a core packet network using a half-call model. More particularly, the invention is directed to the processing of calls within the core packet network of a mobile switching center (MSC) by dividing the call into two half-calls -- an originating half-call and a terminating half-call. This technique allows for flexibility in implementation and processing of calls.

While the invention is particularly directed to the art of processing calls in a core packet network, and will be thus described with specific reference thereto, it will be appreciated that the invention may have usefulness in other fields and applications. For example, the invention may be used to process calls in other network components where it is desirable to implement a common technique for processing calls of different character.

By way of background, distributed voice over packet systems use packet-based networks as core networks. The core network in such a system functions as the extended switching fabric and connects calls from one external interface to another external interface. Under current standards, the internal interfaces connect elements in the core network to one another using H.248 control parameters. Ephemeral, or temporary, terminations connecting internal interfaces are selected by the media gateways using H.248 protocol (ITU-T H.248.1 Gateway Control Protocol: Version 2), which is incorporated herein by reference. In this regard, call controllers share interfaces with media gateways within a voice over packet system using the H.248 protocol.

It should be appreciated that the core packet network is implemented for a variety of reasons. In this regard, typical data on the ingress channel of a system is in time-division multiplexed (TDM) format. Similarly, data content on the egress channels is in TDM format. However, maintaining a network switch, such as a mobile switching center (MSC), that transports call content in TDM format over a wide area would be quite expensive in terms of both overhead and resource allocation. More particularly, TDM format would require that each call be channeled through the system on a dedicated channel. This would require an extraordinary amount of hardware and would not be an efficient use of resources. A core packet network, however, allows for data to be converted at the ingress of the system from TDM format to packet format so that it can be more efficiently handled. The packet data is then converted back to TDM format at the egress for transmission out of the voice over packet system.

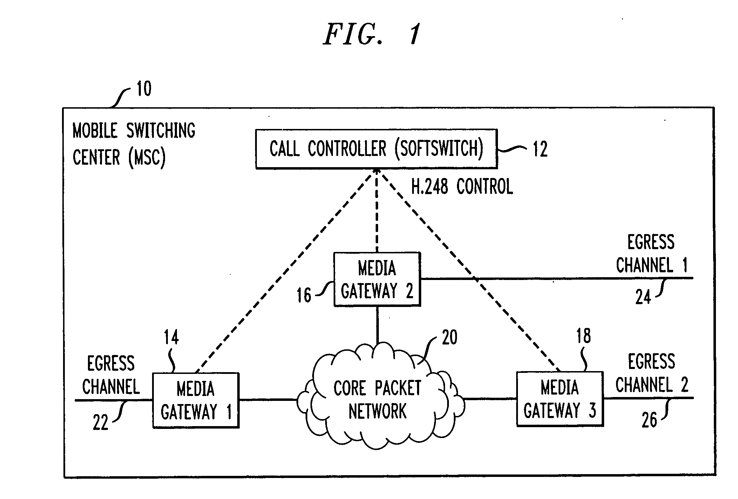

Referring now to Figure 1, a block diagram of a distributed voice over packet system is shown. The system takes the form of a mobile switching center (MSC) 10 and includes a call controller, or soft switch, 12 and media gateways 14, 16 and 18. Core packet network 20 is used for communication between the media gateways. Also, as can be seen, an ingress channel 22 on the originating side of the system is provided. Likewise, egress channels 24 and 26 are provided on the terminating side of the system. Calls are received on the ingress channel 22 and the call content is processed by and through the media gateways under the control of the call controller 12. As noted above, the call controller uses an H.248 interface to communicate with the media gateways and the call content transferred through the core packet network 20 is in packet format.

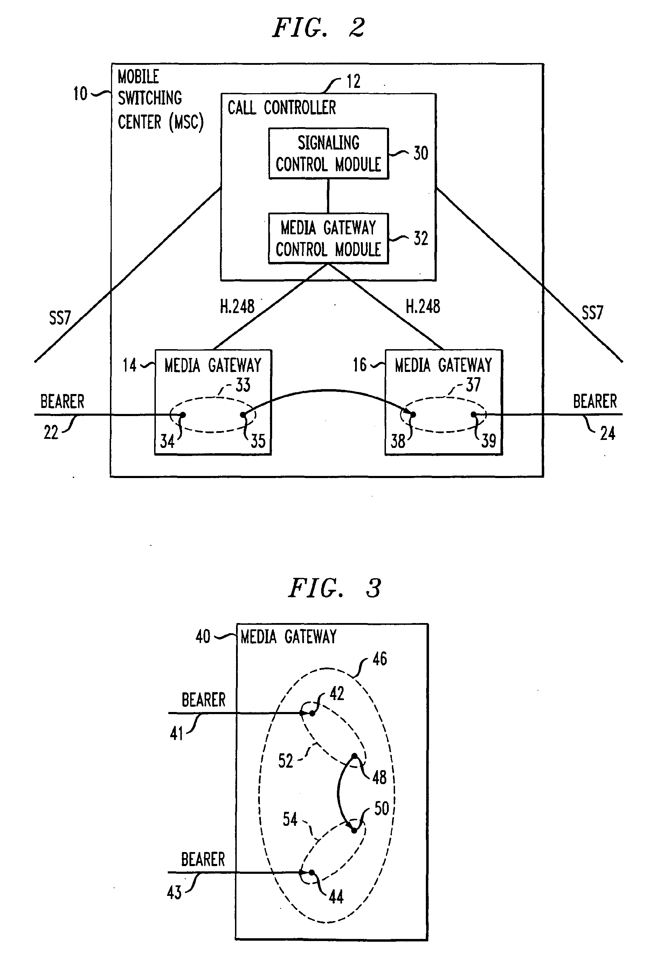

More particularly, referring now to Figure 2 (which is a partial view of the mobile switching center (MSC) 10), it can be seen that the call controller 12 includes control modules 30, and 32. In a typical application, a call is received by the MSC 10 and bearer traffic is provided to the media gateway on the ingress channel 22. Signaling is provided to the call controller 12, and more specifically, control module 30 of the call controller 12. Once the call is set-up by the call control module 30, control is passed on to the control module 32. The control module 32 then communicates with the media gateway 14, as well as the media gateway 16. It should be understood that the H.248 protocol or other media gateway control protocols is used for doing so. The bearer traffic is passed from the media gateway 14 to the media gateway 16 via the terminations and contexts that are established by the H.248 protocol. Upon egress from the system, the bearer traffic is passed along egress channel 24 and signaling is also output from the control module 30 of the call controller 12.

It should be recognized that the media gateways have call contexts set-up therein. For example, a call context 33 includes terminating points 34 and 35 in media gateway 14. Similarly, a call context 37 includes terminating points 38 and 39 in media gateway 16. The establishment of these call contexts and the associated terminating connections is well known in the art.

Notably, the system of Figure 2 illustrates that the call is being controlled by a single call control process in the call controller. Moreover, it is the entire call that is being controlled, not portions thereof.

The system such as that shown in Figure 1 and Figure 2 operate adequately in a majority of circumstances contemplated by the industry standards; however, there are special circumstances that result in less than desirable processing using this technology. For example, referring now to Figure 3, the traditional approach to call processing as referenced above requires a different call model (or procedure) when dealing with a call that originates and terminates within the same media gateway. As shown, media gateway 40 shows an ingress channel 41 and egress channel 43 associated within the same media gateway for the same call. Using the H.248 protocol, it is necessary to set-up a call context 46 for the originating and terminating connections 42 and 44. While it is relatively easy to maintain different call models for simple calls for which the ingress and egress are on the same media gateway or are on different media gateways, it takes significant amount of efforts to maintain the different call models for complex calls with more advanced services. Therefore, it is desirable to use the same call model for these situations. To do so where the call originates and terminates on the same media gateway 40, one must also establish the context 52, including terminating points 42 and 48, and establish the context 54, including terminating points 44 and 50. The same call model shown in Fig. 2 can then be used. This ensures that advanced features only need to be based on one call model. However, the additional contexts 52 and 54 were required to be set up during the processing of the call to accomplish this objective.

Another special case that is not adequately addressed by the traditional call processing approaches of Figures 1 and 2 is the case of multi-leg calls, e.g. conference calls and monitored calls. These features are necessary to current communication systems but, presently, require additional processing and overhead.

As such, it is desired that a processing scheme that allows for flexibility in addressing these various circumstances and others is desired.

The present invention contemplates a new and improved scheme for processing calls in a core packet network using a half-call model that resolves the above-referenced difficulties and others.

### SUMMARY OF THE INVENTION

A method and apparatus for processing calls in a core packet network using a half-call model are provided.

In one aspect of the invention, the method includes receiving a call having a call content on the ingress channel, establishing an originating half call context for the call, controlling the originating half call context for the call by a first control module of the call controller, instructing a second control module of the call controller to establish a terminating half call context for the call, establishing the terminating half call context for the call, controlling the terminating half call context for the call by the second module, transmitting the call content from the originating half call context to the terminating half call context based on the controlling by the first and second control modules and transmitting the call content out of the system on the egress channel.

In another aspect of the invention, the establishing of the originating half call context includes establishing the originating half call context within a media gateway.

In another aspect of present invention, the establishing of the terminating half call context includes establishing the terminating half call context within a media gateway.

In another aspect of the invention, an apparatus is provided that includes means for receiving a call having call content, means for establishing an originating half call context for the call, means for controlling the originating half call context for the call, means for establishing a terminating half call context for the call, means for controlling the terminating half call context for the call, means for transmitting the call content from the originating half call context to the terminating half call context based on the means for controlling and means for transmitting the call content out of the system on the egress channel.

In another aspect of the invention, the originating half call context resides in a first media gateway and the terminating half call context resides in a second media gateway. In another aspect of the invention, the originating half call context resides in a media gateway and the terminating half call context resides in the same media gateway.

In another aspect of the invention, additional call contexts are established to allow for monitoring of the call.

Further scope of the applicability of the present invention will become apparent from the detailed description provided below. It should be understood, however, that the detailed description and specific examples, while indicating preferred embodiments of the invention, are given by way of illustration only, since various changes and modifications within the spirit and scope of the invention will become apparent to those skilled in the art.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:
Figure 1 is a block diagram of a distributed voice over packet system;
Figure 2 is a block diagram showing additional details of the voice over packet system of Figure 1;
Figure 3 is an illustration of call context and connections or terminations in a media gateway;
Figure 4 is a block diagram illustrating a system according to the present invention;
Figure 5 is a block diagram of a media gateway incorporating features of the present invention; and,
Figure 6 illustrates a portion of a system incorporating features of the present invention; and,
Figure 7 is a flow chart illustrating a method according to the present invention.

### DETAILED DESCRIPTION OF THE PREFERRED EMBODIMENTS

A distributed voice over packet (IP or ATM) system, according to the present invention, uses a packet-based network as its core network. The core network functions as an extended switching fabric and connects all media gateways interfacing with external time-division multiplexed (TDM), Internet Protocol (IP) or asynchronous transfer mode (ATM) networks. A call going through the system enters in a specified format (TDM, for example) from the ingress interface connected to the external network. Through the core network, the call -- in packet format -- is switched to the egress interfaces connected to the same or other external networks.

Notably, according to the present invention, a complete call from ingress to egress is divided into half calls, the originating side and the terminating side. It is possible to have more than one terminating side, i.e. for purposes of multi-leg communications such as monitored calls or conference calls. Each half call is represented by one H.248 context with two or more terminations. The context for the originating half call includes the termination (TDM, RTP or ATM) representing the ingress channel and the termination(s) representing connection(s) to terminating half calls in the core network. The context for the terminating half call generally has two terminations, one connected to the ingress half call connected to the core network and the other associated with the egress channel. The terminations connected to the core network are ephemeral and selected by the media gateway during the call set-up time. The terminations connected to ingress or egress channels may be semi-permanent or ephemeral depending on whether the terminations are provisioned in the call controller or not. It should be understood that the originating half call context and the terminating half call context are controlled separately, i.e. by separate control modules within the call controller.

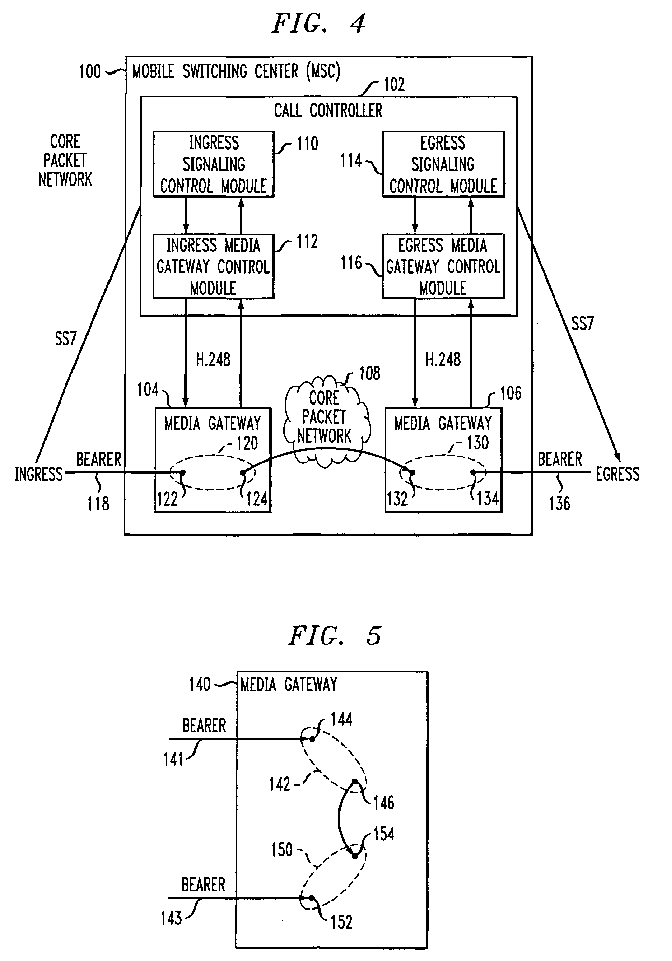

Referring now to the drawings wherein the showings are for purposes of illustrating the preferred embodiments of the invention only and not for purposes of limiting same, Figure 4 provides a view of an overall preferred system according to the present invention. As shown, a distributed voice over packet (internet protocol (IP) or asynchronous transfer mode (ATM)) system according to the present application takes the form of a mobile switching center (MSC) 100. The mobile switching center (MSC) 100 includes a call controller or soft switch 102, media gateway 104 and media gateway 106. Also provided within the system 100 is a core packet network 108 which allows the media gateways to communicate with one another via packet techniques.

The call controller 102 includes signaling control module 110 and media gateway control module 112 on the originating side of the system. The call controller includes signaling control module 114 and media gateway control module 116 on the terminating side of the system.

For a given call, call content is provided to the media gateway 104 on ingress channel 118 that carries bearer traffic. For such a call, media gateway 104 establishes a half call context 120 having terminating points 122 and 124. Terminating point 122 connects to the ingress channel and terminating point 124 connects to the media gateway 106 -- through the core packet network. Media gateway 106 establishes a half call context 130 that includes terminating points 132 and 134. As shown, terminating point 132 connects with the media gateway 104 -- through core packet network 108 -- and terminating point 134 connects with egress channel 136 to provide bearer traffic external to the network.

With respect to signaling, an incoming call results in suitable signaling, such as SS7 signaling, being provided to the call controller 102. Specifically, signals are received by the control module 110 for call set-up. After preliminary processing, that determines the incoming channel and the media gateway terminating that channel, is conducted by the control module 110, the call control is passed on to the media gateway control module 112. The control module 112 then creates a half call context for the originating side of the call by communication with the media gateway 104 using the H.248 protocol. During the set-up of the half call context for the originating side of the call, the signaling control module 110 signals the control module 114 with information about the terminations in the originating context 120 and the called party number. The control module 114 then, in turn, selects the egress channel and communicates with the media gateway 106, using H.248 protocol, to set-up a half call context for the terminating side of the call. In this way, the call is divided into half-call components that are being concurrently processed by the system.

It is to be appreciated that establishing contexts for the calls, or half calls, is accomplished using known techniques that will apparent to those in the field upon reading this disclosure. For example, the call that is received includes not only call content (e.g. voice or data) but also information on 1) the phone number (or other identification number) or device from which the call originates (e.g. the originating side of the call) and 2) the phone number (or other identification number) or device to which the call is destined (e.g. the terminating side of the call). This information is then used by the call controller and the appropriate media gateway to establish the half call contexts, using conventional techniques for establishing conventional call contexts.

Once the context 120 for the originating side of the call and the context 130 for the terminating side of the call are established, appropriate signaling is provided to the media gateways 104 and 106 to instruct these media gateways to communicate with one another through the core packet network 108. The bearer traffic, or call content, can then be transmitted therebetween. As the call is forwarded on to the terminating side of the system, suitable signaling, such as SS7 signaling, is provided along with the bearer traffic at the egress point of the system.

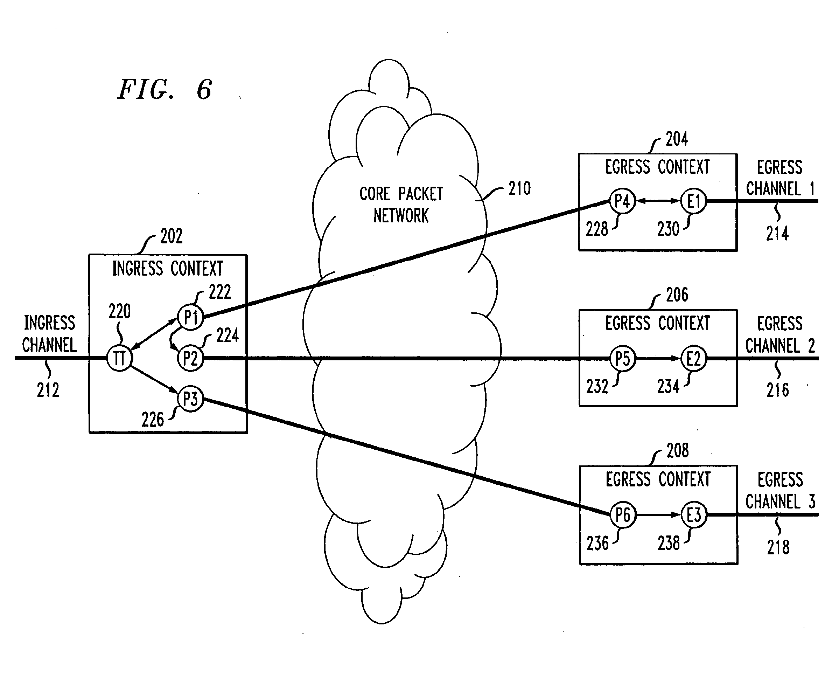

Notably, the use of the half-call model for call processing allows for flexibility in the system. First, there is flexibility in that the half-call model approach of the present invention can be used to address a number of special circumstances that arise in call processing, as will be described in connection with Figures 5 and 6. Second, there is flexibility in that the system 100 does not necessarily have to be housed entirely within the same physical system. That is, the MSC 100 can be implemented as a distributed system, such that the call context for the originating side of the call can be established in one geographic location and the call context for the terminating side of the call can be established in another geographic location. For example, the call context for the originating side of the call may be established -- using control modules 110 and 112 and media gateway 104 -- in Chicago, Illinois while the call context for the terminating side of the call may be established -- using control modules 114 and 116 and media gateway 106 -- in Cleveland, Ohio. It should be understood that the system may also be implemented in the traditional manner in a single physical location.

As to the special cases noted above, reference is now made to Figure 5. As shown, media gateway 140 includes an ingress channel 141 and an egress channel 143. According to the principles of the present invention, a call entering the media gateway on ingress channel 141 is accepted within a half call context 142 established for the originating side of the call. The half call context 142 includes terminating points 144 and 146. The terminating point 144 connects to the ingress channel while the terminating point 146 connects to the context set up for the terminating side of the call. In this regard, a half call context 150 is established for the terminating side of the call. The half call context 150 includes terminating points 152 and 154.

It should be understood that the media gateway 140 operates in a manner substantially similar to the media gateways 104 and 106 of Figure 4. In this regard, the call context 142 is established for the originating side of the call. The call context 150 is established for the terminating side of the call. The signaling from the call controller is similar to that shown in Figure 4. The call controller controls the half calls with separate call control processes. The only substantive difference is that the same media gateway holds the half call context for the originating side of the call and the half call context for the terminating side of the call. Therefore, transmission of the call content through the core packet network is not necessary -- it can be transmitted directly from the originating call context to the terminating call context if the media gateway chooses to implement call processing in that manner.

The configuration and functioning of the media gateway 140 has advantages over the previously known but inadequate techniques. Most notably, the media gateway 140 uses only two (2) call contexts that are established using a uniform approach that is used in other call processing circumstances. Therefore, unnecessary processing and special case treatment is not required.

Referring now to Figure 6, another special case is illustrated. As noted above, traditional technologies require increased overhead and special accommodations for call monitoring situations. However, implementing the present invention allows for convenient call monitoring techniques to be implemented, using the uniform approach realized by the present invention.

As shown, a system 200 includes an ingress context 202 and egress contexts 204, 206 and 208. These ingress and egress contexts may each take the form of a media gateway but all of these established contexts may be within the same media gateway. As an alternative, it may be that only the egress contexts share the same media gateway.

Also shown in the system is a core packet network 210 that allows the contexts to communicate. Traffic is input to the system on egress channel 212 on the originating side of the call and output from the system on egress channels 214, 216 and 218.

In the system shown, a call that comes into the system on ingress channel 212 has its originating half call context 202 set-up between terminating points 220 and 222. Likewise, the terminating half call context 204 is set-up between terminating points 228 and 230. To accomplish this, the principles discussed in connection with Figure 4 are applied.

To monitor this call, the half call context that is established for the originating side of the call is simply "tapped." First, a new termination 224, with one-way communication from 222, and a new termination 226, with one-way communication from 220, are established in the originating context 202. On the terminating side, the context 206 is created using terminating points 232 and 234. This allows for monitoring of traffic that flows from the egress side to the ingress side, and consequently flows through the originating context for terminating points 222 and 224, by the context 206, as shown.

Additionally, context 208 is set-up to use terminating points 236 and 238. The context 208 is then able to monitor information that is provided from the ingress channel to the system, as shown.

It is to be understood that the present invention may be implemented in variety of manners using a variety of hardware and software techniques that will be apparent to those skilled in the field upon a reading of the present disclosure. Any particular implementation is dependent upon the precise network configuration used for the implementation, objectives of the designer, etc.

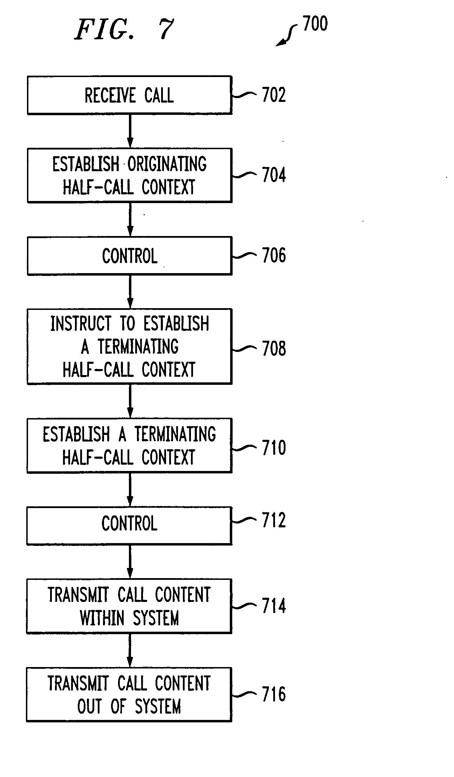

Referring now to Figure 7, a flow chart illustrating a method 700 according to the present invention is provided. The method is implemented by a variety of components within the system, such as that shown in Figure 4.

The method 700 includes first receiving a call having call content, originating information, and terminating information on the ingress channel (step 702). An originating half call context for the call is then established based on the originating information (step 704). It is to be appreciated that this call context may be established as described in connection with Figure 4. The half call originating context is created by a media gateway and in the media gateway based on the information noted above and signaling from the first control module of the call controller. The originating half call context for the call is also controlled by a first control module of the call controller (step 706). This control relates, among other well known tasks, to preparation of the call content for transmission through the system.

After the originating half call context is established, a second control module of the call controller is instructed to establish a terminating half call context for the call (step 708). This instruction is in the form of signaling from the first control module to the second control module. As noted above, the second control module may or may not be in the same physical location of the first control module. This flexibility allows for the system to be self-contained or distributed over a geographic area. Consequently, the terminating half call context for the call is established based on the terminating information and the signaling (step 710). Again, the terminating half call context is created by a media gateway and in the media gateway based on the information noted above and signaling from the first and second control modules of the call controller. The terminating half call context (e.g. the media gateway maintaining the terminating half call context) may be located within the same physical system as the originating half call context or it may be located in a separate structure of a distributed system. Further, it is to be appreciated that the terminating half call context may also be located within the same media gateway as the originating half call context. This scenario, and application of the present invention thereto, is described in more detail in connection with Figure 5.

The terminating half call context for the call is then controlled by the second control module (step 712). This control relates, among other well known tasks, to preparation for transmission of the call content through the system to the terminating context.

At an appropriate time, the call content from the originating context is transmitted to the terminating context based on the controlling of each call context by the first and second control modules (step 714). This is controlled by the signals provided by the first and second control modules of the call controller wherein the information transmitted is in packet format. Placing the call content in such packet format may be accomplished in a multitude of manners that are well known in the field. Of course, this transmission may occur through the core packet network, as described in connection with Figure 4. Likewise, the transmission may occur within the same media gateway as described in connection with Figure 5. Last, the call content is transmitted out of the system on the egress channel (step 716).

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. A method for processing calls in a voice over packet system, the system including a call controller having control modules, a plurality of media gateways, an ingress channel, an egress channel and a core packet network, the method comprising:
receiving a call having call content, originating information, and terminating information on the ingress channel;
establishing an originating half call context for the call based on the originating information;
controlling the originating half call context for the call by a first control module of the call controller;
instructing a second control module of the call controller to establish a terminating half call context for the call;
establishing the terminating half call context for the call based on the terminating information;
controlling the terminating half call context for the call by the second module;
transmitting the call content from the originating context to the terminating context based on the controlling of each call context by the first and second control modules; and,
transmitting the call content out of the system on the egress channel.

2. The method as set forth in claim 1 wherein the establishing of the originating half call context includes establishing the originating half call context within a media gateway.

3. The method as set forth in claim 1 wherein the establishing of the terminating half call context includes establishing the terminating half call context within a media gateway.

4. The method as set forth in claim 1 wherein the originating half call context resides in a first media gateway and the terminating half call context resides in a second media gateway.

5. The method as set forth in claim 1 wherein the originating half call context resides in a media gateway and the terminating half call context resides in the same media gateway.

6. An apparatus for processing calls in a voice over packet system, the apparatus comprising:
means for receiving a call having call content;
means for establishing an originating half call context for the call;
means for controlling the originating half call context for the call;
means for establishing a terminating half call context for the call;
means for controlling the terminating half call context for the call;
means for transmitting the call content from the originating half call context to the terminating half call context based on the means for controlling; and,
means for transmitting the call content out of the system on the egress channel.

7. The apparatus as set forth in claim 6 wherein means for establishing an originating half call context is a media gateway.

8. The apparatus as set forth in claim 6 wherein the originating half call context resides in a first media gateway and the terminating half call context resides in a second media gateway.

9. The apparatus as set forth in claim 6 wherein the originating half call context resides in a media gateway and the terminating half call context resides in the same media gateway.

10. The apparatus as set forth in claim 6 further comprising additional call contexts to allow for monitoring of the call.
